# EUROPÄISCHE PATENTSCHRIFT

(11) **EP 0 406 223 B1**
(45) Veröffentlichungstag und Bekanntmachung des Hinweises auf die Patenterteilung: **31.08.1994**
(21) Anmeldenummer: 90890194.5
(22) Anmeldetag: 27.06.1990
(51) Int. Cl.: B29C 65/20

(54) **Vorrichtung zum Verschweissen von Kunststoffbahnen**
Apparatus for welding plastic sheets
Dispositif pour le soudage de feuilles en matière plastique

(30) Priorität: 29.06.1989 AT 1604/89
(43) Veröffentlichungstag der Anmeldung: 02.01.1991
(73) Patentinhaber: ISOCHEMIE AG, 8750 Glarus (CH)
(72) Erfinder: Resch, Wilfried, A-9300 St. Veit/Glan (Kärnten) (AT)
(74) Vertreter: Beer, Otto

(56) Entgegenhaltungen:
- EP-A- 0 009 015
- AT-A- 381 276
- AT-B- 359 277
- AT-B- 363 676
- DE-U- 8 805 783
- FR-A- 2 572 997
- US-A- 3 826 701
- US-A- 4 146 419
- US-A- 4 872 941

## Beschreibung

Die Erfindung betrifft eine Vorrichtung zum Verschweissen einander randseitig überlappender Bahnen aus Kunststoff mit einem gegen den Spalt zwischen Schweißrollen gerichteten keilförmigen Heizkörper, wobei der keilförmige Heizkörper an einem Träger angeordnet ist, der auf einer an einem Grundkörper der Vorrichtung befestigten Führung verschiebbar geführt ist, wobei die eine Schweißrolle am Grundkörper und die andere Schweißrolle an einem am Grundkörper um eine zu den Drehachsen der Schweißrollen parallele Achse verschwenkbar gelagerten Hebel gelagert ist, wobei am Grundkörper und am verschwenkbar gelagerten Hebel Räder bzw. Rollen vorgesehen sind, über welche die Vorrichtung verfahrbar ist, und wobei jede Schweißrolle mit einem Antriebsmotor gekuppelt ist.

Derartige Vorrichtungen sind beispielsweise aus der DE-U-88 05 783, sowie aus der AT-PS 359 277, 363 676 und 381 672 bekannt.

Die bekannten Geräte weisen unter anderem die folgenden Nachteile auf:
Einmal ist bei den bekannten Geräten der Druck, den die Schweißrollen auf die miteinander zu verbindenden Ränder der überlappend aufgelegten Bahnen aus Kunststoff ausüben, sowie der Anpreßdruck des keilförmigen Heizkörpers nur von Hand aus und nach Gefühl und Erfahrung einstellbar. Reproduzierbare Werte für den Druck der Schweißrollen und den Anpreßdruck des keilförmigen Heizkörpers sind daher nicht erzielbar. Weiters erfolgt die Zustellung des keilförmigen Heizkörpers an die in den Spalt zwischen den Schweißrollen einlaufenden Ränder der miteinander zu verschweißenden Bahnen aus Kunststoff und dessen Rückstellung nach erfolgter Schweißarbeit von Hand aus, was eine zusätzliche Belastung des die Vorrichtung benutzenden Personals darstellt.

Weiters wird die Temperatur des keilförmigen Heizkörpers bei den bekannten Geräten von der Bedienungsperson gefühlsmäßig eingestellt, wobei für gewöhnlich die Temperatur des keilförmigen Heizkörpers so lange erhöht wird, bis die Folien schmelzen und miteinander verschweißt werden können.

Schließlich ist es bei den bekannten Vorrichtungen zum Verbinden der Ränder von überlappend ausgelegten Bahnen aus Kunststoff nachteilig, daß die zur Energieversorgung vorgesehenen Stromleitungen so lange ausgebildet sein müssen, wie das zu isolierende Projekt, so daß sich beispielsweise bei der Herstellung von Tunnelisolierungen Kabellängen von 30 bis 40 m ergeben, was die Handhabung der Vorrichtung zusätzlich erschwert.

Aus der AT-PS 385 719 ist eine Schweißvorrichtung für Bahnen oder Plachen aus thermoplastischem Kunststoff bekannt. Diese Vorrichtung besteht aus einer durch ein Druckrollenpaar mit zwei antreibbaren Druckrollen, deren Abstand voneinander geändert werden kann, gebildeten Anpreßvorrichtung, welche an einer gegebenenfalls mit Laufrollen versehenen Halteeinrichtung angeordnet ist, die auch einen keilförmigen, gegebenenfalls zwischen einer Ruhe- und einer Arbeitsstellung verschiebbaren und in diesen Stellungen mit unterschiedlicher Leistung betreibbaren Heizkörper aufweist, der vor den Druckrollen angeordnet ist. Bei dieser bekannten Vorrichtung werden die beiden Druckrollen unabhängig voneinander angetrieben, wobei die eine Druckrolle mit ihrem Antrieb über eine in einem U-förmig gebogenen Rohr geführte biegsame Welle verbunden ist.

Das aus der AT-PS 381 276 bekannte Schweißgerät zum Verschweißen von Kunststoffbahnen besteht aus einem Geräterahmen, einer vor der Verschweißungsstelle längsverschiebbar angeordneten, keilförmigen Heizeinrichtung und einander gegenüberliegenden und aneinander anpreßbaren, durch einen Motor antreibbaren Druckrollen. Bei diesem bekannten Gerät ist der Geräterahmen aus zwei parallel zueinander verlaufenden, jeweils mit einer Druckrolle verbundenen Rahmenprofilen und einem vorzugsweise als Rohr ausgebildeten, an einem Rahmenprofil starr befestigten Verbindungsteil gebildet, wobei das andere freie Rahmenprofil durch die Wirkung einer Feder verdrehbar am Verbindungsteil gelagert ist.

In der DD-PS 96 894 wird ein Verfahren zum kontinuierlichen Verschweißen thermoplastischer Folien aus Polyolefinen unter Verwendung eines dem Foliendurchlauf angepaßten Heizelementes in Verbindung mit einem Temperaturindikator und einem Temperaturregler sowie unter Verwendung einer vor dem Heizelement angeordneten Führungseinrichtung und dem Heizelement nachgeordneten Druck- und Kühlrollen vorgeschlagen, bei dem eine Temperatur des Formheizelementes oberhalb der Zersetzungstemperatur des thermoplastischen Werkstoffes angewendet werden soll.

Die DE-OS 25 10 521 zeigt eine Vorrichtung zum Verschließen von Beuteln oder Säcken mit Walzen zum Zusammendrükken und Verschweißen der Ränder des Beutels. Um die beiden Walzen gegeneinander zu drücken, ist eine Vorrichtung mit einer Spannfeder vorgesehen, die so eingerichtet ist, daß die eine Walze von der anderen beim Durchlauf der zu verschweißenden Ränder abhebbar ist. Weiters ist ein Anschlag vorgesehen, welcher in der Weise ausgebildet ist, daß die Walzen bei Nichtvorhandensein miteinander zu verschweißender Kunststoff-Folien mit geringem Druck gegeneinander gedrückt werden.

Der Erfindung liegt die Aufgabe zugrunde, eine einfach aufgebaute und einfach zu bedienende Vorrichtung der eingangs genannten Gattung anzugeben.

Erfindungsgemäß wird diese Aufgabe dadurch gelöst, daß der die eine Schweißrolle tragende Hebel mit einem, zu ihm vorzugsweise senkrechten Arm verbunden ist, daß zwischen dem freien Ende des Armes und einem verstellbaren Anschlag ein Drucksensor angeordnet ist, daß der keilförmige Heizkörper gegenüber seinem Träger auf einer Führung durch einen Stellmotor verschiebbar geführt ist, und daß zwischen einander zugekehrten Flächen des keilförmigen Heizkörpers und des Trägers ein Drucksensor angeordnet ist.

Bevorzugte Ausgestaltungen der erfindungsgemäßen Vorrichtung sind Gegenstand der Unteransprüche.

Mit der erfindungsgemäß ausgebildeten Vorrichtung können einzelne oder mehrere der nachstehend genannten Vorteile erzielt werden.

Der Druck, der auf die Ränder der miteinander zu verschweißenden Bahnen (Folien) von den Schweißrollen aufgebracht wird, ist reproduzierbar und durch den Drucksensor, der den Schweißrollen zugeordnet ist, genau auf den jeweils gewünschten Wert einstellbar.

Das Verstellen des Heizkeiles (Vorschieben am Beginn des Schweißvorganges bzw. Rückstellen nach Beendigung desselben) erfolgt mit einem Antriebsmotor, wobei der Anpreßdruck des keilförmigen Heizkörpers über den Drucksensor eingestellt und während der Durchführung der Schweißarbeit (automatisch) geregelt werden kann. Dadurch, daß der vom keilförmigen Heizkörper auf die einander zugekehrten Flächen der miteinander zu verbindenden Bahnen aus Kunststoff ausgeübte Druck während des Schweißvorganges laufend nachgeregelt werden kann, wird ohne zusätzliche Tätigkeit von Hand aus eine allfällige Abnützung des Heizkeiles kompensiert und/oder Änderungen der Stärke der miteinander zu verbindenden Bahnen ausgeglichen.

Durch die Möglichkeit, dem keilförmigen Heizkörper einen Temperaturfühler zuzuordnen, ist eine sehr genaue Regelung der Temperatur desselben möglich. Dies ist insbesondere möglich, wenn die erfindungsgemäße Vorrichtung mit einer tragbaren Energiequelle z.B. einem Akkumulator ausgestattet ist, so daß die sonst erforderlichen, langen Energieversorgungskabel, welche wegen der zu großen Übertragungslängen bisher die Verwendung eines Temperaturfühlers verhindert haben, entfallen.

Wenn die Energieversorgung der erfindungsgemäßen Vorrichtung tragbar ist und beispielsweise über einen Akkumulator erfolgt, der von der Bedienungsperson getragen wird, ergeben sich kurze Energieversorgungs- und Steuerkabel, so daß die Handhabung der Vorrichtung nicht zuletzt auch durch das geringe Gewicht derselben erheblich vereinfacht wird.

Schließlich besteht bei der erfindungsgemäßen Vorrichtung die Möglichkeit, sämtliche Parameter für die Schweißung, wie Schweißdruck, Geschwindigkeit und Temperatur in programmierbaren Zeitabständen gemessen und gespeichert werden. Zusätzlich können auch Daten über die Bedienungsperson, das Projekt, Datum und Uhrzeit gespeichert und bei Bedarf über einen Drucker ausgegeben werden.

Weitere Einzelheiten und Merkmale der erfindungsgemäßen Vorrichtung ergeben sich aus der nachstehenden Beschreibung, der in den schematischen Zeichnungen dargestellten, beispielsweisen Ausführungsformen einer erfindungsgemäßen Vorrichtung zum Verschweißen der Ränder von überlappend ausgelegten Bahnen aus Kunststoff. Es zeigt
Fig. 1 eine Vorrichtung in Seitenansicht,
Fig. 2 die Vorrichtung von links der Fig. 1 aus gesehen,
Fig. 3 eine Draufsicht auf die Vorrichtung aus Fig. 1,
Fig. 4 in Schrägansicht die Verstellvorrichtung für den keilförmigen Heizkörper,
Fig. 5 in Schrägansicht eine Einstellvorrichtung für die beweglich gelagerte Schweißrolle und
Fig. 6 eine andere Ausführungsform der Einstellvorrichtung.

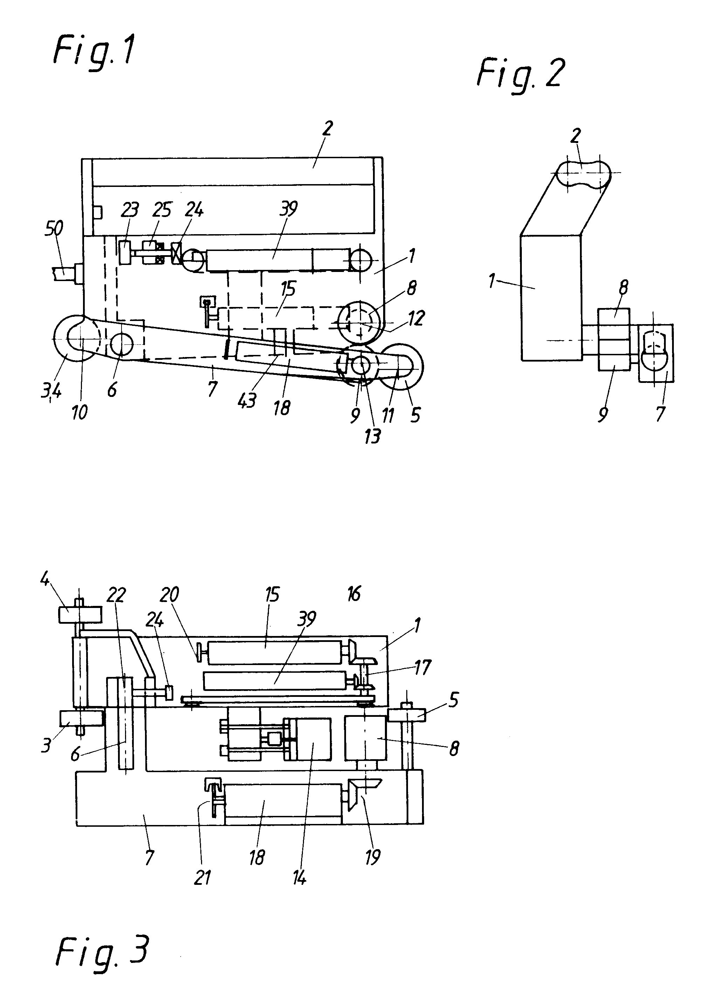

Die in den Zeichnungen gezeigte Schweißvorrichtung besteht aus einem gehäuseartig ausgebildeten Grundkörper 1, der oben einen Handgriff 2, der ergonomisch geformt sein kann, trägt und der über Räder 3, 4 und 5 verfahrbar ist, wobei die Vorrichtung beim Ausführen der Schweißarbeit von rechts nach links der Fig. 1 bewegt wird.

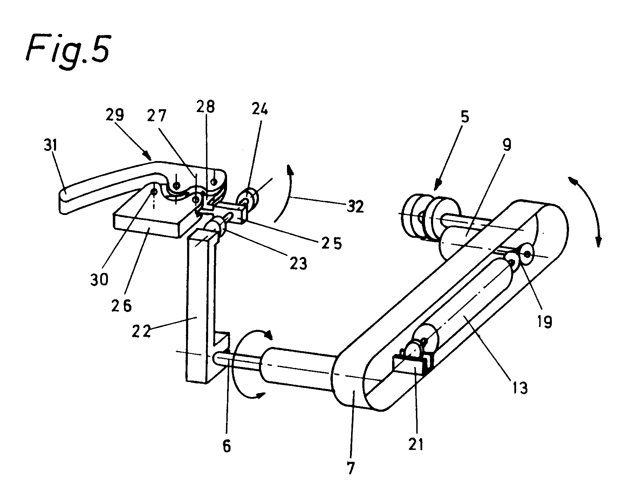

Die Räder 3 und 4 sind unmittelbar am Grundkörper 1 drehbar gelagert, wogegen das Rad 5 - anstelle des einen Rades 5 können auch zwei nebeneinanderliegende Räder 5 vorgesehen sein, wie dies in Fig. 5 gezeigt ist - an einem im Grundkörper 1 um eine Achse 6, die zu den Drehachsen der Räder 3, 4, 5 parallel ausgerichtet ist, verschwenkbar gelagerten Hebel 7, und zwar an dessem freien Ende 3 drehbar gelagert ist.

Wie aus den Zeichnungen ersichtlich, besitzt die Schweißvorrichtung zwei Schweißrollen 8 und 9. Die obere Schweißrolle 8 ist am Grundkörper 1 und die untere Schweißrolle 9 ist am verschwenkbar gelagerten Hebel 7 angeordnet. Die Achsen 10 und 11 der Räder 3, 4 und 5 und die Achsen 12 und 13 der beiden Schweißrollen 8 und 9 sind zueinander parallel ausgerichtet. Dabei ist die Anordnung des Rades 5 bezüglich der Schweißrolle 9 so getroffen, daß diese oberhalb einer von unten an die Räder 3, 4 und 5 gemeinsam angelegten Tangentialebene angeordnet ist.

Die Schweißvorrichtung besitzt weiters einen Heizkörper 14, der an seinem den Schweißrollen 8 und 9 zugekehrten Ende keilförmig ausgebildet ist. Der Heizkörper 14 wird beim Schweißvorgang auf die Schweißrollen 8 und 9 zugestellt, so daß die zwischen die Schweißrollen 8 und 9 einiaufenden Ränder der miteinander zu verbindenden Bahnen (Folien), die beispielsweise aus thermoplastischem Kunststoff bestehen, am Heizkörper 14 entlang gleiten und so auf die Verschweißtemperatur aufgeheizt werden.

Für den Drehantrieb der von oben auf die miteinander zu verbindenden Bahnen aus Kunststoff einwirkenden Schweißrolle 8 ist im Grundkörper 1 ein Gleichstrommotor 15 vorgesehen, der über ein Winkelgetriebe 16 die Welle 17 der Schweißrolle 8 antreibt.

Für den Antrieb der am verschwenkbaren Hebel 7 gelagerten Schweißrolle 9, ist ein Gleichstrommotor 18 vorgesehen, der die Schweißrolle 9 über ein Winkelgetriebe 19 antreibt. Beiden Antriebsmotoren 15 und 18 sind Drehzahlmeßvorrichtungen 20 und 21 zugeordnet, welche die von ihnen erfaßten Drehzahlen an eine Steuereinheit (nicht dargestellt) abgeben, so daß die beiden Schweißrollen 8 und 9 mit gleicher Umfangsgeschwindigkeit angetrieben werden. Dadurch ist gewährleistet, daß während des Schweißvorganges keine Relativbewegungen der miteinander zu verschweißenden Bahnen aus Kunststoff auftreten können.

Aus Fig. 5 ist ersichtlich, daß mit dem verschwenkbar gelagerten Hebel 7 über dessen Achse 6 ein Arm verbunden ist, der zum Hebel 7 etwa senkrecht ausgerichtet und als Stabfeder 22 ausgebildet ist. Am freien Ende der Stabfeder 22 greift über einen Drucksensor 23 das freie Ende einer Stellschraube 24 an. Die Stellschraube 24 ist in eine Gewindebohrung in einem Block 25 eingeschraubt und ihre jeweils eingestellte Lage kann mit Hilfe einer nicht gezeigten Gegenmutter festgelegt werden.

Der Block 25 ist im Grundkörper 1 oder einem mit diesem verbundenen Träger 26 um eine zur Stabfeder 22 etwa parallele, zur Einstellschraube 24 etwa senkrecht verlaufende Achse 27 verschwenkbar gelagert. Der Block 25 weist weiters einen Ansatz 28 auf, dessen freies Ende mit einer Kniehebelanordnung 29 verbunden ist, die ihrerseits bei 30 am Träger 26 bzw. am Grundkörper 1 abgestützt ist. Durch Betätigen der Kniehebelanordnung 29 über deren Handgriff 31 kann der Block 25 und damit die Stellschraube 24 aus der in Fig. 5 gezeigten Wirklage in Richtung des Pfeiles 32 ausgeschwenkt werden. Bei ausgeschwenkter Stellschraube 24 wirkt diese nicht mehr auf das freie Ende der Stabfeder 22 ein, so daß der Hebel 7 frei verschwenkt werden kann und die Schweißrolle 9 von der anderen Schweißrolle 8 wegbewegt werden kann, wie dies notwendig ist, damit die miteinander zu verbindenden Ränder der Bahnen aus Kunststoff leicht zwischen die Schweißrollen 8 und 9 eingeführt werden können. Durch Zurückschwenken der Kniehebelanordnung 29 gelangt die Stellschraube 24 wieder in ihre Wirklage und der vorher mit Hilfe der Stellschraube 24 eingestellte Wert für den Anpreßdruck der Schweißrolle 9 gegen die Schweißrolle 8 (bei zwischengelegten Bahnen aus Kunststoff) ist wieder gegeben.

Das Einstellen des gewünschten Wertes für den von den Schweißrollen 8 und 9 auf die Bahnen ausgeübten Druck gestaltet sich durch den Drucksensor 23 sehr einfach, da dieser den jeweiligen Druck entsprechende Signale an eine Anzeigevorrichtung ( nicht gezeigt) abgibt.

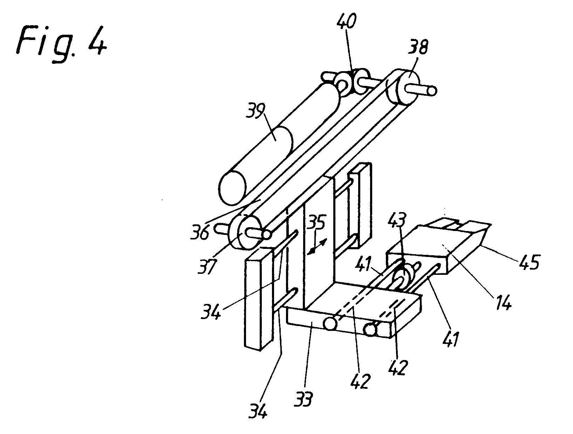

Wie weiter oben erwähnt, ist der keilförmige Heizkörper 14 gegenüber den beiden Schweißrollen 8 und 9 verstellbar. Die hiezu im gezeigten Ausführungsbeispiel der Vorrichtung vorgesehene Verstellvorrichtung ist in Fig. 4 gezeigt.

Aus Fig. 4 ist ersichtlich, daß der keilförmige Heizkörper 14 an einem Träger 33, der etwa L-förmig ausgebildet ist, angeordnet ist. Der Träger 33 seinerseits ist über zwei am Grundkörper 1 befestigte Führungsstangen 34 in Richtung des Doppelpfeiles 35 verschiebbar. Zur Verstellung des Trägers 33 und damit des keilförmigen Heizkörpers 14 ist der Träger 33 mit einem Trum eines Endlosfördergliedes 36 verbunden, das über zwei Umlenkrollen 37, 38 geführt ist. Zur Betätigung des Endlosfördergliedes 36 und damit des Trägers 33 und letztlich des keilförmigen Heizkörpers 14 in Richtung des Doppelpfeiles 35 ist ein Stellmotor 39 vorgesehen, der über ein Winkelgetriebe 40 die Welle der Umlenkrolle 38 antreibt.

Der keilförmige Heizkörper 14 ist an zwei Stäben 41 befestigt, die in Bohrungen 42 im horizontalen Abschnitt des Trägers 33 in Richtung des Doppelpfeiles 35 verschiebbar geführt sind. Zwischen den einander zugekehrten Stirnflächen des Trägers 33 und des keilförmigen Heizkörpers 14 ist ein Drucksensor 43 vorgesehen. Der Drucksensor 43 gibt an eine Steuereinheit und gegebenenfalls auch an eine Anzeigeeinheit dem Anpreßdruck des keilförmigen Heizkörpers 14 gegen die zwischen die Schweißrollen 8 und 9 einlaufenden Bahnen entsprechende Signale ab. Unter Auswertung dieser Signale wird von der Steuereinheit der Stellmotor 39 betätigt, wenn der vom Drucksensor 43 erfaßte Anpreßdruck nicht dem gewünschten und vorgegebenen Wert entspricht.

Um die erfindungsgemäße Vorrichtung möglichst leicht zu gestalten, sind der gehäuseartige Grundkörper 1 und die mechanischen Antriebselemente, sowie weitere wesentliche Bauteile, wie beispielsweise der verschwenkbar gelagerte Hebel 7, aus warmgehärtetem Aluminiumguß gefertigt, wodurch auch eine gute Korrosionsbeständigkeit gewährleistet ist.

Die Geschwindigkeit, mit der die Schweißrollen 8 und 9 von ihren Antriebsmotoren 15 und 16 durch die Drehzahlmesser 20, 21 synchronisiert angetrieben werden, kann aufgezeichnet werden.

Der von den Schweißrollen 8 und 9 aufgebrachte (Schweiß-)Druck wird von der durch die Stellschraube 20 belasteten Stabfeder 22 aufgebracht und vom Drucksensor 23 erfaßt. Durch die oben beschriebene Ausbildung des Verstellmechanismus für den verschwenkbar gelagerten Hebel 7 wird der einmal eingestellte Schweißdruck auch wieder erreicht, nachdem die Stellschraube 24 mit Hilfe der Kniehebelanordnung 29 nach dem Einführen von Bahnen zwischen die voneinander entfernten Schweißrollen 8 und 9 wieder in ihre Wirklage gebracht worden ist.

Der keilförmige Heizkörper 14 kann gegebenenfalls mit Luftunterstützung ausgeführt sein, so daß er verschleißarm ist. Es ist jedoch auch möglich, ihn aus Keramik, z.B. aus Steathit oder aus Metallguß (z.B. Messing) herzustellen.

Dem keilförmigen Heizkörper 14 ist ein Temperaturfühler 45 zugeordnet, der ein der Temperatur des keilförmigen Heizkörpers 14 entsprechendes Signal an eine Anzeige-und/oder Steuereinheit abgibt. Für gewöhnlich wird die Temperatur an der Spitze des keilförmigen Heizkörpers 14 230 bis 240°C betragen, wenn Bahnen aus einem thermoplastischen Kunststoff (z.B. Polyvinylchlorid oder einem anderen Polyolefin) miteinander verschweißt werden.

Wie erwähnt, wird der Anpreßdruck mit dem der keilförmige Heizkörper 14 gegen die zwischen die Schweißrollen 8 und 9 einlaufenden Bahnen gedrückt wird, und der vom Stellmotor 39 aufgebracht wird, vom Drucksensor 43 erfaßt und ebenfalls einer Steuer- und/oder Anzeigeeinheit zugeführt.

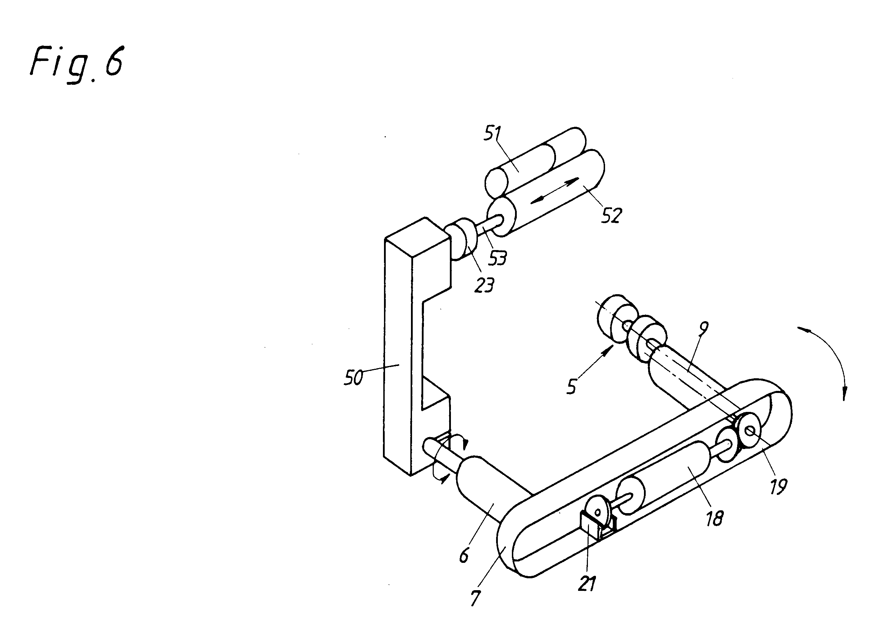

Bei der in Fig. 6 gezeigten Ausführungsform ist der mit dem Hebel 7 über dessen Achse 6 verbundene Arm 50 starr ausgebildet und beispielsweise auf der Achse 6 festgeklemmt. Dem freien Ende des Armes 50 ist ein durch einen Stellmotor 51 und ein Getriebe 52, z.B. einem Spindeltrieb verstellbarer Anschlag 53 zugeordnet. Zwischen dem Anschlag 53 und dem Arm 50 ist der Drucksensor 23 vorgesehen, der den Stellmotor 51 so steuert, daß zwischen den Schweißrollen 8 und 9 jeweils der gewünschte, vorwählbare Anpreßdruck herrscht.

Die Energieversorgung der erfindungsgemäßen Vorrichtung erfolgt über tragbare Akkumulatoren, wobei in dem die Akkumulatoren aufnehmenden Gehäuse auch die nötigen Anzeige- und Steuereinheiten für die Bedienung und den Betrieb der erfindungsgemäßen Vorrichtung untergebracht sein können.

In dieser Steuereinheit kann auch ein Programmablauf vorgegeben sein, der nach Kontrolle des Ladezustandes des Akkumulators das Aufheizen des keilförmigen Heizkörpers 14 einleitet und ein Signal abgibt, wenn die für das Schweißen erforderliche Temperatur, die vom Temperaturfühler 45 erfaßt wird, erreicht ist. Hierauf drückt die Bedienungsperson eine an der Bedienungseinheit vorgesehene Starttaste, der keilförmige Heizkörper 14 wird von seiner Stellvorrichtung in die Schweißposition vorgeschoben und nachdem der erforderliche Schweißdruck eingestellt worden ist, wird durch Starten der Antriebsmotoren 15 und 18 das Verschweißen der Ränder der einander überlappend ausgelegten Bahnen selbsttätig eingeleitet. Am Ende eines Schweißvorganges wird eine Stoptaste gedrückt, der Vorschub durch Anhalten der Motoren 15 und 18 abgebrochen, der keilförmige Heizkörper 14 in seine zurückgezogene, in Fig. 3 gezeigte Ausgangslage zurückbewegt und gegebenenfalls die Temperatur des keilförmigen Heizkörpers 14 abgesenkt, um Energie zu sparen.

Die im Energieversorgungsteil untergebrachten Akkumulatoren sind zweckmäßig so ausgelegt, daß hinreichend Energie für zwei 30 bis 70 m lange Schweißnähte vorhanden ist.

## Patentansprüche

1. Vorrichtung zum Verschweißen einander randseitig überlappender Bahnen aus Kunststoff mit einem gegen den Spalt zwischen Schweißrollen (8, 9) gerichteten keilförmigen Heizkörper (14), wobei der keilförmige Heizkörper (14) an einem Träger (33) angeordnet ist, der auf einer an einem Grundkörper (1) der Vorrichtung befestigten Führung (34) verschiebbar geführt ist, wobei die eine Schweißrolle (8) am Grundkörper (1) und die andere Schweißrolle (9) an einem am Grundkörper (1) um eine zu den Drehachsen (12, 13) der Schweißrollen (8, 9) parallele Achse (6) verschwenkbar gelagerten Hebel (7) gelagert ist, wobei am Grundkörper (1) und am verschwenkbar gelagerten Hebel (7) Räder bzw. Rollen (3, 4, 5) vorgesehen sind, über welche die Vorrichtung verfahrbar ist, und wobei jede Schweißrolle (8, 9) mit einem Antriebsmotor (15, 18) gekuppelt ist, dadurch gekennzeichnet, daß der die eine Schweißrolle (9) tragende Hebel (7) mit einem, zu ihm vorzugsweise senkrechten Arm (22, 50) verbunden ist, daß zwischen dem freien Ende des Armes (22) und einem verstellbaren Anschlag (24, 53) ein Drucksensor (23) angeordnet ist, daß der keilförmige Heizkörper (14) gegenüber seinem Träger (33) auf einer Führung (41, 42) durch einen Stellmotor (39) verschiebbar geführt ist, und daß zwischen einander zugekehrten Flächen des keilförmigen Heizkörpers (14) und des Trägers (33) ein Drucksensor (43) angeordnet ist.

2. Vorrichtung nach Anspruch 1, dadurch gekennzeichnet, daß der Arm als Stabfeder (22) ausgebildet ist.

3. Vorrichtung nach Anspruch 1 oder 2, dadurch gekennzeichnet, daß der Anschlag (53) durch einen Stellmotor (51) und ein Getriebe (52) verstellbar ist.

4. Vorrichtung nach einem der Ansprüche 1 bis 3, dadurch gekennzeichnet, daß der Anschlag eine Stellschraube (24) ist, die in einen mit dem Grundkörper (1) verbundenen Block (25) eingeschraubt ist.

5. Vorrichtung nach Anspruch 4, dadurch gekennzeichnet, daß der Block (25), in den die Stellschraube (24), die mit einer Gegenmutter gegen unbeabsichtigtes Verdrehen gesichert ist, eingeschraubt ist, im Grundkörper (1) um eine zur Stellschraube (24) senkrechte Achse (27) verschwenkbar ist und daß der Block (25) einen Ansatz (28) aufweist, der mit einer Kniehebelanordnung (29), die im Grundkörper (1) oder einem mit diesem verbundenen Träger (26) abgestützt ist, gekuppelt ist, wobei die Kniehebelanordnung (29) vorzugsweise einen Betätigungshandgriff (31) besitzt.

6. Vorrichtung nach einem der Ansprüche 1 bis 5, dadurch gekennzeichnet, daß beide Antriebsmotoren (15, 18) für die Schweißrollen (8, 9) mit Drehzahlmeßgeräten (20, 21) ausgerüstet sind.

7. Vorrichtung nach einem der Ansprüche 1 bis 6, dadurch gekennzeichnet, daß der vorzugsweise gewinkelt ausgebildete Träger (33) des keilförmigen Heizkörpers (14) mit einem Trum eines Endlosfördergliedes (36), z.B. einem Zahnriemen, das über im Grundkörper (1) gelagerte Umlenkrollen (37, 38) gelegt ist, verbunden ist, und daß der Stellmotor (39) mit einer (38) der Umlenkrollen (37, 38) gekuppelt ist.

8. Vorrichtung nach Anspruch 7, dadurch gekennzeichnet, daß der Stellmotor (39) mit der Welle einer (38) der Umlenkrollen (37, 38) für das Endlosförderglied (36) über ein Winkelgetriebe (40) gekuppelt ist.

9. Vorrichtung nach einem der Ansprüche 1 bis 8, dadurch gekennzeichnet, daß der keilförmige Heizkörper (14) an Stäben (41) befestigt ist, die in Bohrungen (42) im Träger (33) für den Heizkörper (14) geführt sind.

10. Vorrichtung nach einem der Ansprüche 1 bis 9, dadurch gekennzeichnet, daß der Träger (33) für den Heizkörper (14) auf am Grundkörper (1) der Vorrichtung befestigten Führungsstangen (34) verschiebbar geführt ist.

## Claims

1. Device for welding plastics material tracks which overlap one another at the edge, comprising a wedge-shaped heating member (14) directed towards the slit between welding rollers (8,9), wherein the wedge-shaped heating member (14) is disposed on a support (33), which is guided displaceably on a guide means (34) which is secured on a base member (1) of the device, wherein the one welding roller (8) is mounted on the base member (1) and the other welding roller (9) is mounted on a lever (7) which is mounted on the base member (1) and is pivotable about an axis (6) which is parallel to the axes of rotation (12,13) of the welding rollers (8,9), wherein wheels or rollers (3,4,5), via which the device is displaceable, are provided, and wherein each welding roller (8,9) is coupled to a drive motor (15,18), characterised in that the lever (7) supporting the one welding roller (9) is connected to an arm (22,50) which is preferably perpendicular in relation thereto; in that there is disposed, between the free end of the arm (22) and a displaceable abutment stop (24,53), a pressure sensor (23); in that the wedge-shaped heating member (14) is guided displaceably in relation to its support (33) on a guide means (41,42) by means of setting motor (39); and in that a pressure sensor (43) is disposed between surfaces of the wedge-shaped heating member (14) and the support (33) which face one another.

2. Device according to claim 1, characterised in that the arm is formed as a bar spring (22).

3. Device according to claim 1 or Claim 2, characterised in that the abutment stop (53) can be adjusted by a setting motor and a gearing (52).

4. Device according to any one of claims 1 to 3, characterised in that the abutment stop is a setting screw (24), which is screwed into a block (25) connected to the base member (1).

5. Device according to claim 4, characterised in that the block (25) into which the setting screw (24), which is secured against accidental unscrewing by means of a counter-nut, is screwed, is pivotable in the base member (1) about an axis (27) which is perpendicular to the setting screw (24); and in that the block (25) comprises a projection (28), which is coupled to an elbow lever arrangement (29), which is supported in the base member (1) or a support (26) connected thereto, wherein the elbow lever arrangement (29) preferably comprises an actuating handle (31).

6. Device according to one of claims 1 to 5, characterised in that both the drive motors (15,18) for the welding rollers (8,9) are provided with rotational speed measuring devices (20,21).

7. Device according to one of Claims 1 to 6, characterised in that the support (33) of the wedge-shaped heating member (14), which support is preferably bent, is connected to a pass of a continuous conveyor element (36), such as a toothed belt for example, which is laid over deflection rollers (37,38) mounted in the base member (1); and in that the setting member (39) is coupled to one (38) of the deflection rollers (37,38).

8. Device according to claim 7, characterised in that the setting motor (39) is coupled to the shaft of one (38) of the deflection rollers (37,38) for the continuous conveyor element (36) via an angular gear (40).

9. Device according to one of claims 1 to 8, characterised in that the wedge-shaped heating member (14) is secured on bars (41) which are conducted into bores (42) in the support (33) for the heating member (14).

10. Device according to one of claims 1 to 9, characterised in that the support (33) for the heating element (14) is guided in a displaceable manner on guide rods (34) which are secured on the base member (1) of the device.

## Revendications

1. Dispositif pour souder des bandes de matière plastique qui se recouvrent mutuellement le long de leurs bords, comprenant un corps chauffant (14) en forme de coin, orienté vers la fente délimitée entre des rouleaux de soudage (8, 9), le corps chauffant (14) en forme de coin étant agencé sur un support (33) qui est guidé mobile en translation sur un guide (34) fixé au corps principal (1) du dispositif, dans lequel l'un (8) des rouleaux de soudage est tourillonné sur le corps principal (1) et l'autre rouleau de soudage (9) est tourillonné sur un levier (7) monté oscillant sur le corps principal (1) pour tourner autour d'un axe (6) parallèle aux axes de rotation (12, 13) des rouleaux de soudage (8, 9), dans lequel il est prévu, sur le corps principal (1) et sur le levier (7) monté oscillant, des roues ou roulettes (3, 4, 5) au moyen desquelles le dispositif peut circuler, et dans lequel chaque rouleau de soudage (8, 9) est accouplé à un moteur d'entraînement (15, 18), caractérisé en ce que le levier (7) qui porte l'un (9) des rouleaux de soudage est relié à un bras (22, 50), qui s'étend de préférence perpendiculairement à ce levier, en ce qu'un capteur de pression (23) est disposé entre l'extrémité libre de ce bras (22) et une butée réglable (24, 53), en ce que le corps chauffant (14) en forme de coin est guidé en translation par rapport à son support (33), sur un guide (41, 42), par un servomoteur (39), et en ce qu'un capteur de pression (43) est disposé entre les surfaces dudit corps chauffant (14) en forme de coin et dudit support (33) qui se font mutuellement face.

2. Dispositif selon la revendication 1, caractérisé en ce que le bras est constitué par une barre de torsion (22).

3. Dispositif selon la revendication 1 ou 2, caractérisé en ce que la butée (53) peut être réglée par un servomoteur (51) et un mécanisme de transmission (52).

4. Dispositif selon une des revendications 1 à 3, caractérisé en ce que la butée est une vis de réglage (24) qui est vissée dans un bloc (25) solidaire du corps principal (1).

5. Dispositif selon la revendication 4, caractérisé en ce que le bloc (25) dans lequel est vissée la vis de réglage (24), laquelle est bloquée par un contre-écrou s'opposant à une rotation intempestive, peut osciller dans le corps principal (1) en tournant autour d'un axe (27) perpendiculaire à la vis de réglage (24), et en ce que le bloc (25) présente un appendice (28) qui est accouplé à un mécanisme à genouillère (29) qui prend appui lui-même dans le corps principal (1) ou dans un support (26) solidaire de ce corps principal, le mécanisme à genouillère (29) possédant de préférence une poignée de manoeuvre (31).

6. Dispositif selon une des revendications 1 à 5, caractérisé en ce que les deux moteurs d'entraînement (15, 18) des rouleaux de soudage (8, 9) sont équipés d'appareils (20, 21) de mesure de la vitesse de rotation.

7. Dispositif selon une des revendications 1 à 6, caractérisé en ce que le support (33), de préférence de forme coudée, du corps chauffant (14) en forme de coin est relié à un brin d'un organe transporteur sans fin (36), par exemple d'une courroie crantée, qui est monté sur des poulies de renvoi (37, 38) tourillonnées dans le corps principal (1), et en ce que le servomoteur (39) est accouplé à l'une (38) des poulies de renvoi (37, 38).

8. Dispositif selon la revendication 7, caractérisé en ce que le servomoteur (39) est accouplé à l'arbre d'une (38) des poulies de renvoi (37, 38) de l'organe transporteur sans fin (36) par l'intermédiaire d'un renvoi d'angle (40).

9. Dispositif selon une des revendications 1 à 8, caractérisé en ce que le corps chauffant (14) en forme de coin est fixé à des barres (41) qui sont guidées dans des perçages (42) du support (33) du corps chauffant (14).

10. Dispositif selon une des revendications 1 à 9, caractérisé en ce que le support (33) du corps chauffant (14) est guidé mobile en translation sur des barres de guidage (34) fixées au corps principal (1) du dispositif.
